# EUROPÄISCHE PATENTSCHRIFT

(11) **EP 0 326 928 B1**
(45) Veröffentlichungstag und Bekanntmachung des Hinweises auf die Patenterteilung: **15.09.1993**
(21) Anmeldenummer: 89101296.5
(22) Anmeldetag: 25.01.1989
(51) Int. Cl.: B29C 65/66, B29C 61/08

(54) **Verfahren und Vorrichtung zum abschnittsweisen Ummanteln von Objekten mit Kunststoff**
Method and device for sectionally sheathing objects with plastic
Procédé et dispositif pour enrober par secteurs des objets avec de la matière plastique

(30) Priorität: 04.02.1988 DE 3803318
(43) Veröffentlichungstag der Anmeldung: 09.08.1989
(73) Patentinhaber: DSG Schrumpfschlauch GmbH, D-53340 Meckenheim (DE)
(72) Erfinder: Arenz, Helmut, D-5305 Alfter-Impekoven (DE)
(74) Vertreter: Grünecker, Kinkeldey, Stockmair & Schwanhäusser Anwaltssozietät

(56) Entgegenhaltungen:
- EP-A- 0 045 213
- DE-A- 2 756 021
- DE-A- 3 234 816
- DE-A- 3 631 259
- GB-A- 1 582 078
- US-A- 4 287 011

## Beschreibung

Die Erfindung betrifft ein Verfahren und eine Vorrichtung zum abschnittsweisen Ummanteln von eine Vielzahl von Adern aufweisenden Verdrahtungssystemen mit Kunststoff. Es ist bereits ein Verfahren (das sogenannte Pressmelt-Verfahren der Patentanmelderin) bekannt bei welchem auf den Außenumfang eines Objektes, insbesondere eines Kabelbündels ein radialschrumpfender Wärmeschrumpfschlauch aufgeschrumpft und die zwischen den einzelnen Kabelsträngen des Kabelbündels vorhandenen Zwischenräume an einer vorbestimmten Abdichtstelle mit Kunststoffmaterial verfüllt werden. Zu diesem Zweck wird zwischen den Kabelsträngen ein Kunststoffelement aus einem thermoplastischen Schmelzkleber plaziert, welches bei Erwärmung schmilzt, aufschaumt und dabei geschlossene Poren bildet. Bei diesem bekannten Verfahren wird der abzudichtende Kabelbündelabschnitt einer Wärmebehandlung zum Aufquellen des eingebetteten Kunststoffelementes sowie zum Zurückschrumpfen des Schrumpfschlauches, eng um das Kabelbündel, unterzogen. Die gegenläufige Bewegung des aufquellenden Kunststoffelementes aus thermoplastischen Schnlelzkleber und des radialschrumpfenden Schrumpfschlauches erzeugt einen Druck, wodurch der Schmelzkleber die Hohlräume zwischen den einzelnen Kabelsträngen eindringt und dabei eine Längswasserabdichtung erzeugt.

Ein Aufschieben von Schrumpfschlauchen auf längliche Objekte, wie beispielsweise Kabelbündel, ist umständlich und zeitraubend, insbesondere dann, wenn diese länglichen Objekte weich und biegsam sind. Sollen beispielsweise Kabelstränge mit einem Schrumpfschlauch ummantelt werden, so müssen die Einzellitzen der Kabelstränge durch den Schrumpfschlauch hindurchgefädelt werden. Entsprechendes gilt, wenn aus einer Vielzahl von Kabelsträngen komplizierte Kabelbäume oder dergleichen unter Verwendung von Wärmeschrumpfschläuchen hergestellt werden.

Aus der DE-A1-32 34 816 ist bereits ein Verfahren der im Oberbegriff der Ansprüche 1 und 8 angegebenen Gattung bekannt.

Bei diesem bekannten Verfahren wird eine schlauchförmige Garnitur entlang einer Mantellinie aufgetrennt, die an den Trennkanten Verdickungen zum Anbringen von mechanischen Befestigungselementen aufweist. Zur Bildung solcher Verdickungen werden in einem Schlauch zwei in Längsrichtung verlaufende mechanisch feste Drähte miteingespritzt. Nach dem Aufweiten des Schlauches wird derselbe zwischen den beiden Drähten entlang der vorstehend erwähnten Mantellinie durchtrennt, und zum Verschließen werden die beiden durch die mechanisch festen Drähte gebildeten Wülste als Stege radial nach außen gebogen.

Aus der EP-A1-0 045 213 sind ein Verfahren und eine Vorrichtung zum Umhüllen eines Gegenstandes mit Kunststoff bekannt, wobei ein quervernetztes polymeres Material um den Gegenstand gewickelt und zwischen dem Klemmbacken eines wiederverwendbaren Montagewerkzeuges eingespannt wird, worauf eine Wärmebehandlung zum Zurückschrumpfen des quervernetzten polymeren Materials durchgeführt wird.

Ferner ist aus der DE-A1-36 31 259 ein Verfahren zum Herstellen von Folienhülsen bekannt, bei welchem im wesentlichen nur in Bahnlängsrichtung vorgereckte Kunststoffolien von einer Vorratsstation abgezogen und ein erster, freier Endkantenbereich dieses Folienabschnittes zur Bildung einer geschlossenen Hülse mit einem zweiten, entgegengesetzten Endkantenbereich zusammengeführt sowie mit diesem stoffschlüssig verbunden wird. Ferner ist aus der DE-A1-36 31 259 eine Vorrichtung bekannt mit Einrichtungen zum Bereitstellen eines Folienabschnittes vorgegebener Länge und zum Zusammenführen der Folien-Endkanten zu einer geschlossenen Hülle, wobei in Wirkverbindung mit einem Folien-Endkantenbereich tretende Greifer sowie eine Verbindungsvorrichtung für die Herstellung einer stoffschlüssigen Naht zwischen den Folien-Endkantenbereichen vorgesehen sind. Mit Hilfe einer Trennvorrichtung kann der hülsenbildende Folienabschnitt abgelängt werden.

Der Erfindung liegt die Aufgabe zugrunde, das abschnittsweise Ummanteln von eine Vielzahl von Adern aufweisenden Verdrahtungssystemen mit Kunststoff zu vereinfachen.

Diese Aufgabe wird durch die in den Patentansprüchen 1 und 8 angegebenen Verfahren gelöst.

Dadurch, daß beim erfindungsgemäßen Verfahren der Axialwulst des Schlauches in zwei Profilwulstbereiche aufgetrennt wird, so daß sich einander zugewandte Flächen ergeben, kann der Schrumpfschlauch beim Ummantelungsvorgang sicher gehalten und zuverlässig wieder geschlossen werden. Das Arbeiten nach der zweiten Ausführungsform des erfindungsgemäßen Verfahrens stellt für die Praxis eine große Vereinfachung dar, da nunmehr das schrumpffähige Band von einer Aufwickelrolle verarbeitet werden kann.

Die mit dem erfindungsgemäßen Verfahren herbeigeführte Ummantelung ist genauso dicht wie eine herkömmlicherweise durch Aufschrumpfen eines Schrumpfschlauches erzielte Ummantelung. Nach einer vorteilhaften Ausgestaltung des erfindungsemäßen Verfahrens kann die Oberfläche der hergestellten Ummantelung so glatt ausgebildet werden, wie sie mit einem aufgeschrumpften Wärmeschrumpfschlauch nicht anders hergestellt werden könnte.

In den Unteransprüchen sind bevorzugte Ausführungsformen der beiden erfindungsgemäßen Verfahrensvarianten beschrieben.

Die Erfindung wird im folgenden anhand von Ausführungsbeispielen und unter Bezug auf die Zeichnung näher beschrieben. In dieser zeigt:
- Fig. 1: einen Schnitt durch einen extrudierten Kunststoffschlauch mit an der Oberfläche ausgebildeter, axialer Wulst,
- Fig. 2: einen Schnitt durch den extrudierten Schlauch nach Fig. 1 sowie einen Schnitt durch diesen Schlauch nach einem radialen Verstrecken desselben,
- Fig. 3: eine schematische Perspektivdarstellung eines aus dem radialverstreckten Schlauch gemäß Fig. 2 durch axiales Auftrennen gebildeten, schrumpffähiges Bandes,
- Fig. 4: einen Schnitt durch den Axialwulstbereich mit darin ausgebildeter Nut,
- Fig. 5: einen Schnitt durch den Axialwulstbereich gemäß Fig. 4 mit zusätzlich an den Wulst ausgebildeten Hinterschneidungen,
- Fig. 6: eine perspektivische Darstellung eines axial verstreckten Wärmeschrumpfschlauches,
- Fig. 7: eine perspektivische Darstellung des axial verstreckten Wärmeschrumpfschlauches gemäß Fig. 6 nach axialem Auftrennen und Aufhaspeln des entstandenen Bandes zu einem Bandwickel,
- Fig. 8: einen schematischen Schnitt durch den Axialwulstbereich eines aus dem Schrumpfschlauch gemäß Figuren 1 und 2 hergestellten Bandes, wobei der Wulstbereich aus einem anderen Werkstoff besteht als das übrige Band,
- Fig. 9: einen schematischen Schnitt durch den Axialwulstbereich eines aus dem Schrumpfschlauch gemäß Figuren 1 und 2 hergestellten Bandes, wobei der Wulstbereich an der Außenoberfläche des Bandes und eine Kleberschicht an der Innenoberseite des Bandes dargestellt sind,
- Fig. 10: eine perspektivische Darstellung eines aus einem wulstlosen Schrumpfschlauch hergestellten Bandes mit an einer Bandoberfläche vorgesehener Kleberschicht,
- Fig. 11: eine mit Fig. 3 vergleichbare perspektivische Darstellung eines Bandes, bei welchem die durch axiales Trennen eines Schlauches im Bereich der Axialwulst gebildeten Schnittflächen und auch die Bandinnenoberfläche mit einer Kleberschicht versehen sind,
- Fig. 12: eine perspektivische Darstellung des Verfahrensschrittes, bei welchem ein schrumpffähiges Band der in Fig. 11 dargestellten Gattung um ein aus eine Vielzahl von **Adern aufweisendes Verdrahtungssystem** gelegt wird,
- Fig. 13: eine schematische Darstellung eines Verfahrensschrittes, bei welchem der in Fig. 12 dargestellte Bandabschnitt in einer ein **Verdrahtungssystem umschließenden** Lage eingespannt wird,
- Fig. 14: eine schematische Darstellung eines an den Verfahrensschritt gemäß Fig. 13 anschließenden Verfahrensschrittes, bei welchem die in einer Einspannvorrichtung eingespannten Endabschnitte des Bandes zusammengepreßt und dabei verschweißt oder verklebt werden,
- Fig. 15: eine schematische Darstellung eines der Darstellung gemäß Fig. 14 nachfolgenden Verfahrensschrittes, bei welchem die Einspannglieder der Einspannvorrichtung soweit zusammengefahren werden, daß die vorstehenden Endabschnitte des aufgeschrumpften Bandes abgeschnitten werden,
- Fig. 16: eine schematische Erläuterung der Verarbeitung des in Fig. 10 dargestellten wulstlosen Bandes, wobei dargestellt ist, wie das um ein **Verdrahtungssystem herumgelegte** Band in einer Vorrichtung gehalten wird,
- Fig. 17: eine perspektivisch-schematische Darstellung eines mit der in Fig. 14 bis 16 erläuterteten Weise mit einer Ummantelung versehenen, aus **Einzeladern** bestehenden **Verdrahtungssytems und**
- Fig. 18: eine schematische Darstellung einer kontinuierlichen Verarbeitung eines schrumpffähigen Bandes, wobei dieses Band von einem Vorrats-Bandwickel über eine Spendereinrichtung dem zu ummantelnden **Verdrahtungssystem** zugeführt wird und eine Einrichtung zum Halten des Bandes während des Schrumpfprozesses sowie zum Abtrennen der hergestellten Ummantelung von dem nichtverbrauchten Band sowie zum Abtrennen der vorstehenden Endabschnitte benutzt wird.

### Die Herstellung des schrumpffähigen Bandes

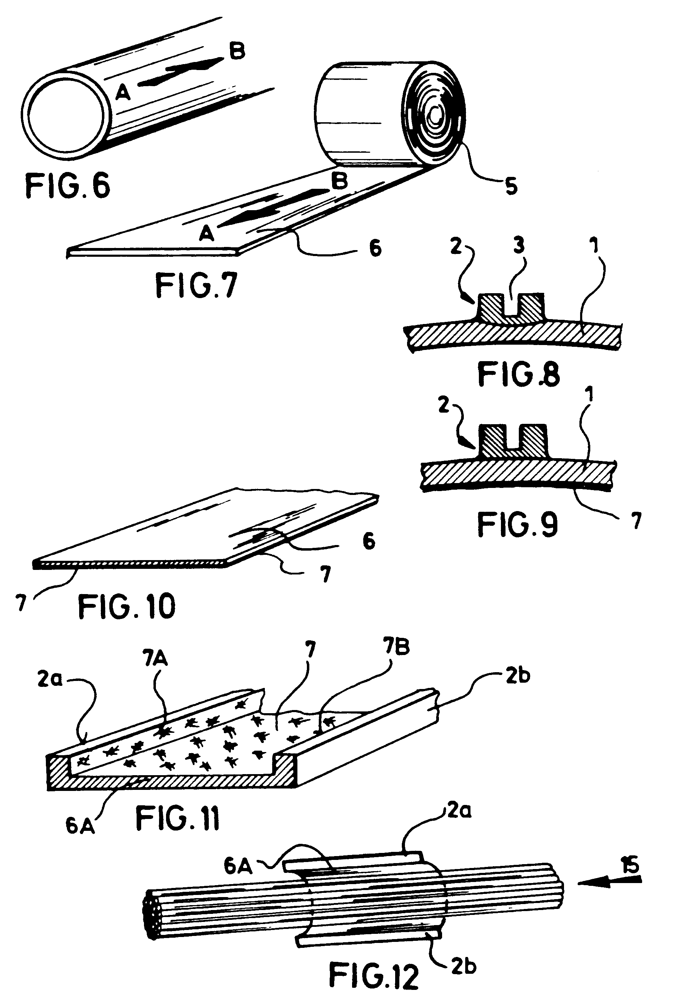

1. Es wird ein schrumpffähiger Kunststoffschlauch aus einem vernetzbaren Polymeren hergestellt. Beispielsweise werden dazu Polymere auf PE-Basis oder PVDF-Basis oder aus Polyamid verwendet. Der Kristallitschmelzpunkt dieser Polymerwerkstoffe liegt in Abhängigkeit von den zu erwartenden Betriebstemperaturen zwischen 90 und 150 °C. Der schrumpffähige Schlauch wird so extrudiert, daß an seiner Oberfläche ein in Schlauch-Längsrichtung verlaufender Wulst ausgebildet wird. Dieser Wulst besteht aus einem vernetzbaren Polymeren, wobei der Wulst entweder aus dem gleichen Werkstoff wie der übrige Schlauch oder aus einem vom Werkstoff des Schlauches verschiedenen Werkstoff bestehen kann. Für viele Zwecke ist es vorteilhaft, für den Axialwulst einen Polymerwerkstoff zu verwenden, dessen Kristallitschmelzpunkt oberhalb des Kristallitschmelzpunktes des Materials des übrigen Schlauches liegt.

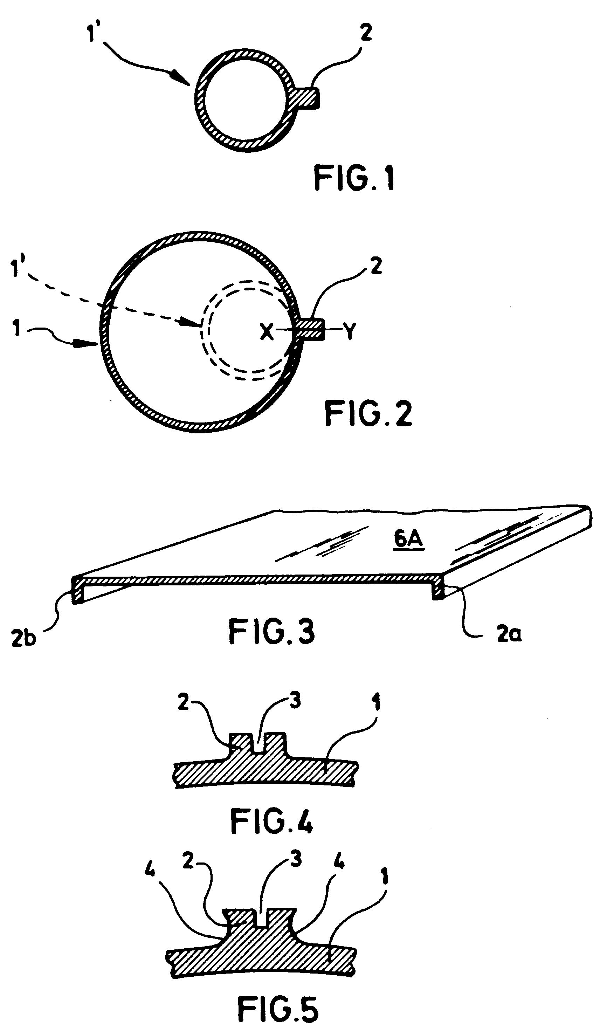

   In Fig. 1 ist ein solcher Schlauch 1' im extrudierten Zustand schematisch im Schnitt dargestellt. Diese Darstellung zeigt den Axialwulst 2 als vorstehendes Profil.
   Der schrumpffähige Schlauch gemäß Fig. 1 wird strahlungsvernetzt und unter Wärmeeinwirkung radial verstreckt (aufgeweitet). Anschließend wird dieser Schlauch axial aufgetrennt, wobei der axiale Trennschnitt durch den Axialwulst 2 hindurchgeführt wird. Fig. 2 zeigt den ursprünglich hergestellten Schlauch 1' und den durch radiales Verstrecken dieses Schlauches gewonnenen und strahlungsvernetzten, schrumpffähigen Schlauch 1. Die in **Fig. 2 angegebene Linie** X-Y veranschaulicht die Schnittlinie beim axialen Auftrennen des strahlungsvernetzten und radial verstreckten Schlauches.
   Durch das genannte axiale Auftrennen entsteht aus dem Schlauch 1 ein schematisch in Fig. 3 dargestelltes schrumpffähiges Band 6A. Wie dargestellt, ist der Axialwulst 2 (Fig. 2) in die Profilwulstbereiche 2a und 2b aufgeteilt worden. Dieses Band 6A hat die Fähigkeit bei Wärmezufuhr in der Breite, also entgegen der Verstreckungsrichtung, zu schrumpfen.
   Der Axialwulst 2 des Schlauches 1 weist vorteilhafterweise eine Nut 3 auf, wie in Fig. 4 dargestellt. Diese Nut 3 erleichtert das in Fig. 2 angegebene axiale Trennen des Schlauches 1 im Bereich der Wulst. Gemäß Fig. 5 kann der Wulst 2 mit in Wulstlängsrichtung verlaufenden Hinterschneidungen 4 versehen sein. Diese Hinterschneidungen 4 erleichtern das Erfassen des wulstförmigen Profils. In den Figuren 3 bis 5 sind schrumpffähige Schläuche 1 dargestellt, bei welchen werkstoffmäßig kein Unterschied zwischen dem eigentlichen Schlauch und dem Wulstprofil besteht. Gemäß Fig. 8 und 9 können jedoch der eigentliche Schlauch und der Wulstbereich aus unterschiedlichen Werkstoffen bestehen.
2. Es wird ein Schlauch aus einem Material, wie vorstehend unter 1. angegeben, hergestellt, der jedoch keinen Axialwulst aufweist und folglich eine glatte Oberfläche hat. Nach der Strahlungsvernetzung wird dieser Schlauch jedoch axial verstreckt, wie in Fig. 6 dargestellt. Der Pfeil AB bezeichnet die axiale Verstreckungsrichtung. Anschließend wird der verstreckte Schlauch in der vorstehend unter 1. beschriebenen Weise axial getrennt, wodurch ein Band entsteht, welches, wie in Fig. 7 angegeben, entgegen der Reckrichtung, also in Richtung des Pfeiles B-A schrumpft. Fig. 7 zeigt das zu einem Bandwickel 5 aufgewickelte Band 6, welches durch axiales Auftrennen des gemäß Fig. 6 axial verstreckten, schrumpffähigen Schlauches entstanden ist.

### Bandaufbau

Die vorstehend gemäß 1. und 2. hergestellten schrumpffähigen Schläuche können unterschiedlich aufgebaut sein. So kann gemäß Fig. 8 der Wulst 2 aus einem anderen Polymerwerkstoff bestehen als der übrige Bereich, d.h. als der hergestellte schrumpffähige Schlauch 6A.

Gemäß Fig. 9 kann der Schlauch 1 auf seiner dem Wulstbereich 2 gegenüberliegenden Oberfläche mit einer Schmelzkleberschicht 7 versehen werden. Fig. 10 zeigt ein Band 6 (ohne Wulstbereiche) mit einer auf der einen Oberfläche ausgebildeten Schmelzkleberschicht 7.

Fig. 11 zeigt ein aus einem Schlauch mit Wulstbereich 2 durch axiales Auftrennen gebildetes schrumpffähiges Band 6A. Die durch Trennen gemäß Fig. 2 gebildeten Profilteile 2a und 2b sind auf ihren inneren Oberflächen mit Schmelzkleberschichten 7A bzw. 7B versehen, was mit sich kreuzenden Linien kenntlich gemacht ist. Wie dargestellt, ist das in Fig. 11 gezeigte Band 6A vorzugsweise, beispielsweise gemäß Fig. 9, mit einer inneren Schmelzkleberschicht beschichtet.

### Die Verwendung des mit Profilbereichen versehenen schrumpffähigen Bandes

Das erfindungsgemäße Verfahren **ist zum abschnittsweisen Ummanteln von Verdrahtungssystemen vorgesehen.**

Besondere Vorteile ergeben sich, wenn das erfindungsgemäße Verfahren mit dem eingangs beschriebenen Pressmelt-Verfahren verbunden wird.

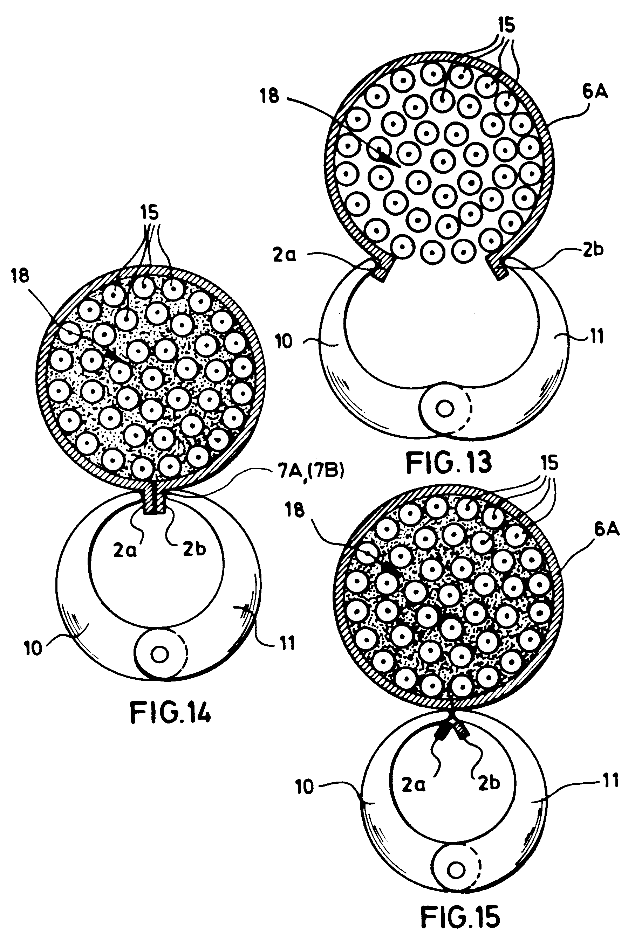

**Soll beispielsweise ein aus einer Vielzahl von Einzeladern 15 bestehendes Verdrahtungssystem bzw. Kabelbündel gemäß Fig. 12 auf einem vorbestimmten** Abschnitt mit Kunststoff ummantelt werden, so wird ein mit den Profilbereichen 2a und 2b versehenes schrumpffähiges Band 6A, vorzugsweise mit Schmelzkleberschichten 7, 7A und 7B um den vorbestimmten Kabelbündelabschnitt herumgelegt. Gemäß Fig. 13 wird das Band 6A eingespannt, wobei die freien Enden zweier verschwenkbarer Glieder 10 und 11 einer Einspanneinrichtung die Profilbereiche 2a und 2b des schrumpffähigen Bandes 6A erfassen.

Durch Wärmezufuhr zu dem Band 6A wird ein enges Aufschrumpfen des Bandes 6A **um das zu ummantelnde Verdrahtungssystem** herbeigeführt. Nachdem das Band und die Profilbereiche 2a, 2b eine geeignete Temperatur erreicht haben, werden die die Endabschnitte des Bandes 6A bildenden Profilbereiche 2a und 2b mit Hilfe der beiden Schwenkglieder 10 und 11 zusammengepreßt (Fig. 14), wobei die einander zugewandten Flächen der Profilbereiche miteinander verschweißt oder verklebt werden. In Fig. 13 bis 16 ist das zu **ummantelnde** Objekt im Ganzen mit dem Bezugszeichen 18 bezeichnet. Durch dieses Verschweißen oder Verkleben der die Endabschnitte des aufgeschrumpften Bandes bildenden Profilbereiche 2a und 2b wird das in einer früheren Verfahrensstufe herbeigeführte axiale Auftrennen des ungeschrumpften Schlauches nach dem Aufschrumpfen wieder rückgängig gemacht.

Nach Abkühlen des Kunststoffmaterials unter dessen Kristallitschmelzpunkt werden nach einer in Fig. 15 dargestellten vorteilhaften Ausgestaltung der Erfindung die beiden Schwenkglieder 10 und 11 der Einspanneinrichtung soweit zusammengefahren, daß die miteinander verbundenen, vorstehenden Profilbereiche 2a,2b abgetrennt werden. Es versteht sich, daß das Abtrennen dieser beiden Profilbereiche keinesfalls für alle Anwendungsbereiche des erfindungsgemäßen Verfahrens erforderlich ist.

Die Figuren 13, 14 und 15 zeigen ein das Verarbeiten eines Profilbereiches 2a,2b aufweisenden schrumpffähigen Bandes 6A, welches in einem vorbestimmten **Bereich um ein Verdrahtungssystem 18** herumgelegt und dann auf dieses Objekt 18 geschrumpft wird. Das Objekt 18 ist im dargestellten Ausführungsbeispiel ein Kabelbündel mit in definierten Bereichen vorgesehenen **Einzeladern** 15. Wie für das bekannte Pressmelt-Verfahren typisch, werden im dargestellten Ausführungsbeispiel die zwischen den **Einzeladern** 15 vorhandenen Zwischenräume an einer vorbestimmten Abdichtstelle mit Kunststoff verfüllt. Dieser Kunststoff besteht aus einem thermoplastischen Schmelzkleber, der bei Erwärmung schmilzt, aufschäumt und geschlossene Poren bildet. In Fig. 13 hat die Wärmebehandlung noch nicht stattgefunden, welche zum Aufschrumpfen des schrumpffähigen Bandes 6A sowie zum Schmelzen und Aufschäumen des nicht dargestellten Schmelzklebers führt. Es versteht sich, daß sowohl die Innenoberfläche des in Fig. 13 dargestellten schrumpffähigen Bandes 6A als auch die einander zugewandten Innenoberflächen der Profilbereiche 2a und 2b vorzugsweise mit den Schmelzkleberschichten 7;7A und 7B gemäß Fig. 11 versehen sind.

Wie bereits erwähnt, zeigt Fig. 14 das Zusammenpressen der Endabschnitte des aufgeschrumpften Bandes 6A mit Hilfe zweier Schwenkglieder 10 und 11, wobei die einander zugewandten Flächen der die Band-Endabschnitte bildenden Profilbereiche 2a und 2b miteinander verschweißt oder verklebt werden. In Fig. 14 sind die Heißkleberschichten 7A und 7B auf den Innenoberflächen der Profilbereiche 2a und 2b angegeben. Ferner ist in Fig. 14 (wie auch in den Figuren 14 und 15) dargestellt, daß die zwischen den Einzellitzen 15 und der aufgeschrumpften Außenhülle vorhandenen Zwischenräume mit Kunststoffmasse verfüllt sind. Bei Anwendung des Pressmelt-Verfahrens stammt diese Kunststoffmasse zum einen aus einem Kunststoffelement aus einem thermoplastischen Schmelzkleber, welches zwischen die Einzellitzen plaziert wird und welches bei Erwärmung schmilzt, aufschäumt und dabei geschlossene Poren bildet. Zum anderen stammt diese Kunststoffmasse aus der inneren Schmelzkleberschicht 7. Durch die beim erfindungsgemäßen Verfahren vorzunehmende Wärmebehandlung wird das Aufschrumpfen des um das Objekt 18 herumgelegten schrumpffähigen Bandes 6 (6A) sowie das Schmelzen und Aufquellen der Schmelzkleber hervorgerufen. Beim Pressmelt-Verfahren erzeugt die gegenläufige Bewegung des zwischen die **Einzeladern 15** plazierten Kunststoffes beim Aufquellen in Verbindung mit dem Schrumpfen des schrumpffähigen Bandes einen Druck, wodurch der geschmolzene Schmelzkleber in die Zwischenräume zwischen den einzelnen **Adern** 15 eindringt und in diesen Bereichen eine Längswasserabdichtung erzeugt.

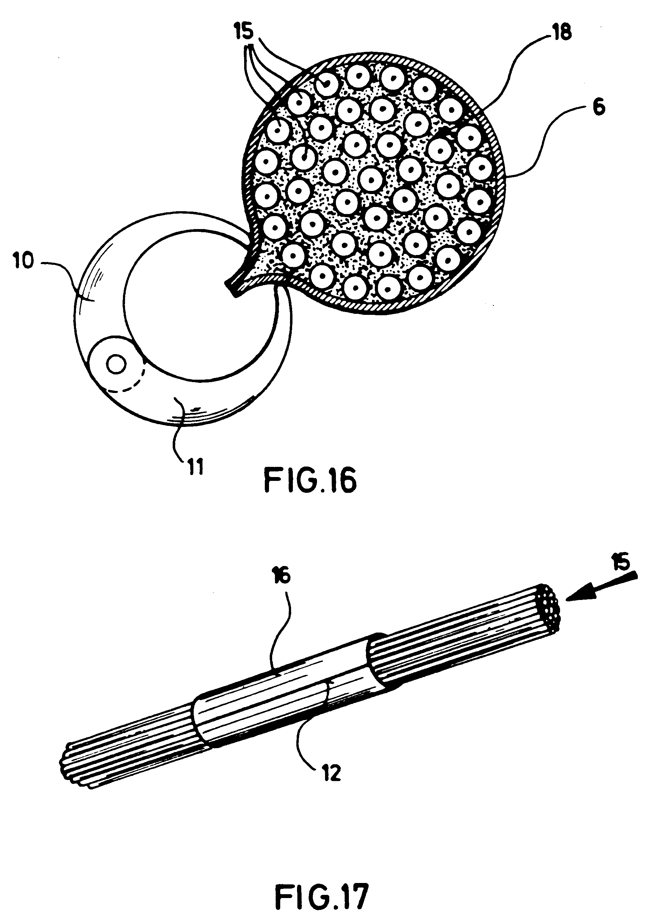

Werden die Profilbereiche 2a,2b gemäß Fig. 15 abschließend abgetrennt, so entsteht eine glatte Verbindungsstelle 12 (Fig. 17), welche so glatt ist, wie sie mit einem Wärmeschrumpfschlauch nicht anders hergestellt werden könnte.

Im vorstehenden ist das erfindungsgemäße Verfahren unter Bezug auf das Pressmelt-Verfahren beschrieben worden. Es sei jedoch unterstrichen, daß es sich bei der gleichzeitigen Anwendung des Pressmelt-Verfahrens und des erfindungsgemäßen Verfahrens lediglich um eine bevorzugte Ausführungsform der Erfindung handelt. Es versteht sich, daß längliche Objekte jeglicher Art mit Hilfe des erfindungsgemäßen Verfahrens ummantelt werden können, ohne daß der Zwischenraum zwischen Einzelelementen des Objektes mit einem Kunststoff ausgefüllt wird.

### Die Verwendung des keine Profilbereiche aufweisenden schrumpffähigen Bandes

Um ein Objekt 18**, d.h.** ein aus **Einzeladern** 15 bestehendes Kabelbündel, wird das in den Figuren 6, 7 und 10 dargestellte schrumpffähige Band herumgelegt und dabei in einer Einspanneinrichtung gehalten, wie in Fig. 16 dargestellt. Da das schrumpffähige Band 6 keine Profilbereiche in seinen Endabschnitten aufweist, müssen die verschwenkbaren Glieder 10 und 11 der Einspanneinrichtung an den in Fig. 16 nicht mit Bezugzeichen bezifferten Endabschnitten des schrumpffähigen Bandes 6 angreifen. Hinsichtlich Fig. 16 sei unterstrichen, daß das dort gezeigte schrumpffähige Band 6 vorzugsweise eine (nicht dargestellte) innere Beschichtung aus einem Schmelzkleber aufweist.

Nach dem Herumlegen einer geeigneten Länge des schrumpffähigen Bandes 6 um das Objekt 18 wird durch Wärmezufuhr das angestrebte Schrumpfen des Bandes 6 um das Objekt sowie das Schmelzen und Aufquellen des Schmelzklebers, soweit vorgesehen, herbeigeführt.

Nachdem das Band 6 und die von den Schwenkgliedern 10 und 11 gehaltenen Endabschnitte des Bandes eine geeignete Temperatur erreicht haben, werden die Schwenkglieder 10 und 11 soweit zusammengefahren, daß die Band-Endabschnitte miteinander verschweißt bzw. verklebt werden.

Nach Abkühlung unterhalb des Kristallitschmelzpunktes des Kunststoffmaterials werden die Schwenkglieder noch weiter aufeinander zubewegt, bis ein Trennen der vorstehenden Endabschnitte erfolgt. Nach dem Abtrennen der Endabschnitte sieht die Verbindungsstelle 12 (Fig. 17) so glatt aus, wie sie mit einem Schrumpfschlauch nicht hätte besser ausgebildet werden können.

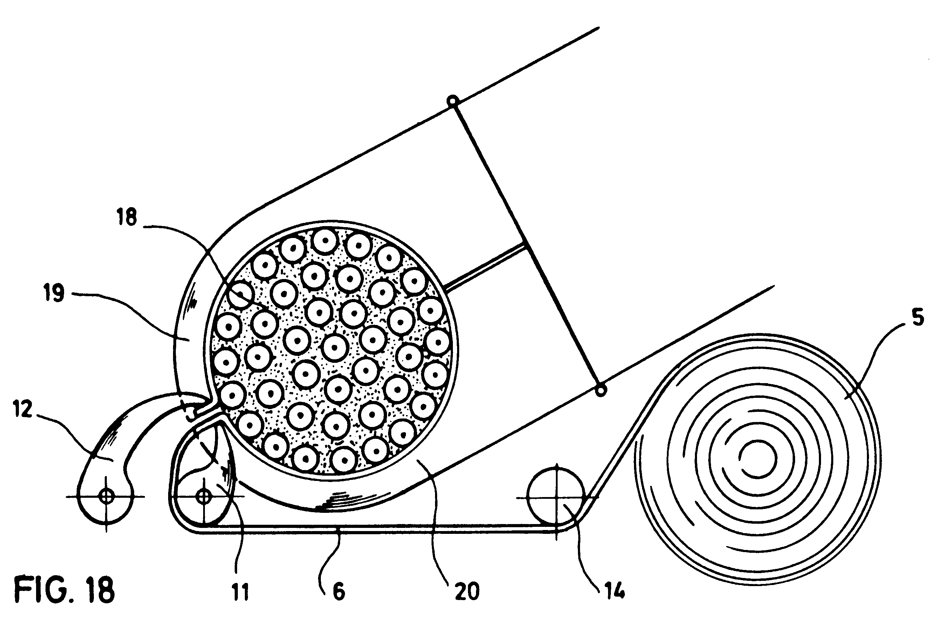

Das Schrumpfband, insbesondere das in Wickelrichtung schrumpfende Schrumpfband 6, **wird**, wie in Fig. 18 dargestellt, von einem Vorrats-Bandwickel 5 abgezogen und über eine Spendereinrichtung 14 dem zu ummantelnden Abschnitt eines Objektes 18 zugeführt. Diese Arbeitsweise gestattet ein kontinuierliches Arbeiten.

Aus der vorstehenden Beschreibung ergibt sich das erfindungsgemäße Verfahren wie folgt:
In einem ersten Schritt wird ein aus einem schrumpffähigen Kunststoffmaterial hergestellter und vernetzter Schlauch unter Wärmeeinwirkung axial oder radial verstreckt und anschließend zur Bildung eines schrumpffähigen Bandes axial getrennt. In einem zweiten Schritt wird eine vorbestimmte Länge des so erhaltenen schrumpffähigen Bandes um einen vorbestimmten Abschnitt eines zu umhüllenden **Verdrahtungssystems herumgelegt und in der** das Objekt umhüllenden Lage festgehalten. In einem dritten Schritt wird dieses um das **System** gelegte, schrumpffähige Band zum Zwecke eines engen Herumschrumpfens um das **System** erwärmt und werden die in gegenseitiger Anlage gebrachten Endabschnitte des geschrumpften Bandes unter Einwirkung von Druck und Wärme miteinander verbunden (verschweißt oder verklebt).

Vorteilhafterweise werden nach Abkühlung die miteinander verbundenen Endabschnitte des Bandes abgeschnitten, so daß eine rohrförmige Ummantelung mit glatter Oberfläche zurückbleibt.

Für die Durchführung des erfindungsgemäßen Verfahrens ist zu beachten, daß das gemäß Figuren 2 und 3 hergestellte schrumpffähige Band in Breitenrichtung schrumpft, während das entsprechend Figuren 6 und 7 hergestellte Band in Band-Längsrichtung, also Pfeilrichtung gemäß Fig. 7, schrumpft.

### Erforderliche Werkstoffeigenschaften

Das schrumpffähige Band 6, 6A besteht aus einem vernetzbaren Polymeren, z.B. auf PE-Basis oder PVDF-Basis oder aus Polyamid. Der Kristallitschmelzpunkt dieser vernetzbaren Polymere liegt je nach Bedarf zwischen 90 und 150 °C.

Die Wulstabschnitte 2 bzw. Profilbereiche 2a,2b bestehen aus einem vernetzbaren Polymeren wie das Band 6A oder **abweichend** davon aus einem Polymeren mit einem höheren Kristallitschmelzpunkt.

Der für die Schmelzkleberschicht 7 verwendete Klebstoff wird je nach Bedarf auf der Innenseite des herstellten Bandes 6, 6A verwendet. Der Kristallitschmelzpunkt dieses Schmelzklebers liegt dabei deutlich unter dem Kristallitschmelzpunkt des Polymerwerkstoffs des Bandes 6, 6A. Es werden Kleber auf PVA-Basis sowie auf Polyamid-Basis bevorzugt.

Der zum Beschichten der Profilbereiche 2a,2b benutzte Schmelzkleber 7A;7B wird je nach Bedarf auf die genannten Profilbereiche aufgetragen. Dieser Kleber wird in seinen Eigenschaften, wie z.B. hinsichtlich seines Kristallitschmelzpunktes, dem Werkstoff des für das jeweilige Band 6;6A verwendeten Werkstoffs angepaßt. Der Kristallitschmelzpunkt des Schmelzklebers muß dabei oberhalb der im Betrieb zu erwartenden Temperaturbelastung des Gesamtsystems liegen. Wird z.B. die hergestellte Ummantelung bis zu einer Betriebstemperatur von +85 °C belastet, so muß der verwendete Schmelzkleber einen deutlich höheren Kristallitschmelzpunkt von beispielsweise 100 °C haben.

Selbstredend wird auch das Material für das Band sowie für die Profilbereiche hinsichtlich des Kristallitschmelzpunktes entsprechend den vorstehenden Überlegungen gewählt. Auch die Schmelzkleberschichten 7, die auf die Bänder 6 aufgetragen werden, werden hinsichtlich ihrer Kristallitschmelzpunkte auf den Werkstoff des Bandmaterials sowie auf die zu erwartenden Betriebstemperaturen abgestellt.

**Die** in Fig. 18 dargestellte Vorrich**tung weist** eine Einrichtung zum Halten und Abtrennen des Bandes 6 auf. Diese Einrichtung enthält verschwenkbare Glieder 10 und 11, die in einer ersten Betriebsstellung die Endabschnitte des **um das Verdrahtungssystem 18** herumgelegten schrumpffähigen Bandes 6 festhalten, wie in Fig. 16 dargestellt. In einer Zweiten Betriebsstellung vermögen die Glieder 10 und 11 diese Endabschnitte fest gegeneinander zu drücken, so daß diese Endabschnitte unter Einwirkung von Wärme und Druck miteinander verschweißt oder verklebt werden. In einer dritten Betriebsstellung trennen die Glieder 10 und 11 die überflüssigen Endabschnitte des aufgeschrumpften Bandes ab. Es versteht sich, daß nicht beide Glieder 10 und 11 verschwenkbar ausgebildet sein müssen.

Wie in Fig. 18 ferner schematisch dargestellt besitzt die Vorrichtung eine aus zwei Kammerteilen 19,20 bestehende Wärmekammer, in welcher der zu ummantelnde **Abschnitt des Verdrahtungssystems** 18 aufnehmbar ist. Diese Wärmekammer umgibt in ihrer Arbeitsstellung den zu ummantelnden Abschnitts **des Systems** allseitig, wobei die beiden Kammerteile 18 und 19 gelenkig gegeneinander bewegbar ausgebildet sind, um ein Öffnen bzw. Schließen der Wärmekammer zu ermöglichen. Vorteilhafterweise gehört zu der **beschriebenen** Vorrichtung eine nichtdargestellte Einrichtung zum Abmessen bzw. Ablängen einer vorbestimmten Länge des schrumpffähigen Bandes 6, welches von dem Vorrats-Bandwickel 5 abgezogen wird. Ferner sind nichtdargestellte Einrichtungen vorgesehen, mit deren Hilfe das von der Vorratsrolle 5 herbeigeführte Band 6 um das **Verdrahtungssystem 18 herumgeführt wird**.

Innerhalb der vorstehend erwähnten Wärmekammer ist eine für die beim erfindungsgemäßen Verfahren vorgesehene Wärmebehandlung erforderliche Temperatur erzeugbar.

## Patentansprüche

1. Verfahren zum abschnittsweisen Ummanteln von eine Vielzahl von Adern (15) aufweisenden Verdrahtungssystemen mit Kunststoff, bei welchem
- ein aus einem schrumpffähigen Kunststoffmaterial hergestellter und vernetzter Schlauch (1), der an seiner Außenoberfläche einen sich axial erstreckenden Wulst (2) aufweist, unter Wärmeeinwirkung radial verstreckt und anschließend zur Bildung eines schrumpffähigen Bandes (6A) axial aufgetrennt wird, wobei
- eine Länge dieses schrumpffähigen Bandes (6A) um den vorbestimmten Abschnitt (18) des Verdrahtungssystems herumgelegt und in diesen Verdrahtungssystemabschnitt (18) umhüllender Lage gehalten wird, und wobei
- das um diesen Verdrahtungssystemabschnitt (18) gelegte schrumpffähige Band (6A) zum Zwecke eines engen Herumschrumpfens um diesen Abschnitt (18) erwärmt und die in Anlage miteinander gebrachten Endabschnitte (2a; 2b) des geschrumpften Bandes (6A) unter Einwirkung von Druck und Wärme miteinander verklebt werden,
dadurch **gekennzeichnet,**
daß der Schlauch (1) in Längsrichtung durch den Axialwulst (2) aufgeschnitten wird, so daß der Axialwulst in zwei Profilwulstbereiche (2a, 2b) aufgetrennt wird und daß die einander zugewandten Flächen dieser beiden Profilwulstbereiche (2a,2b) bei der Anwendung von Druck und Wärme miteinander verklebt werden.

2. Verfahren nach Anspruch 1, dadurch gekennzeichnet, daß nach Abkühlen des um den Verdrahtungssystemabschnitt (18) herumgeschrumpften Bandes (6A) die miteinander verbundenen **vorstehenden Profilbereiche** (2a; 2b) dieses Bandes (6A) abgeschnitten werden, so daß das um den Verdrahtungssystemabschnitt (18) geschrumpfte Band (6A) im wesentlichen die Gestalt einer rohrförmigen Ummantelung (16) mit glatter Oberfläche erhält.

3. Verfahren nach Anspruch 1, dadurch gekennzeichnet, daß ein schrumpffähiger Schlauch (1) verwendet wird, dessen axialer Wulst (2) eine in Wulstlängsrichtung verlaufende Nut (3) aufweist.

4. Verfahren nach Anspruch 1 oder Anspruch 3, dadurch gekennzeichnet, daß ein schrumpffähiger Schlauch (1) verwendet wird, dessen axialer Wulst (2) mit in Wulstlängsrichtung verlaufenden Hinterschneidungen (4) versehen ist.

5. Verfahren nach Anspruch 1, 3 oder 4, dadurch gekennzeichnet, daß ein schrumpffähiger Schlauch (1) verwendet wird, bei welchem der axiale Wulst (2) aus einem vom Werkstoff des übrigen Schlauches verschiedenen Polymer besteht, wobei der Werkstoff des Wulstes einen höheren Kristallitschmelzpunkt aufweist als der übrige Schlauch.

6. Verfahren nach wenigstens einem der Ansprüche 1 bis 5, dadurch gekennzeichnet, daß ein auf einer Oberfläche mit einem Schmelzkleberschicht (7) versehenes schrumpffähiges Band (1) hergestellt wird.

7. Verfahren nach Anspruch 1, 3, 5 oder 6, dadurch gekennzeichnet, daß nach dem Trennen der Wulst die Trennflächen mit einem Schmelzkleber (7A, 7B) beschichtet werden.

8. Verfahren zum abschnittsweisen Ummanteln von eine Vielzahl von Adern aufweisenden Verdrahtungssystemen mit Kunststoff, bei welchem
- ein aus einem schrumpffähigen Kunststoffmaterial hergestellter und vernetzter Schlauch unter Wärmeeinwirkung verstreckt und anschließend zur Bildung eines schrumpffähigen Bandes (6) axial aufgetrennt wird, wobei
- eine Länge dieses schrumpffähigen Bandes (6) um einen vorbestimmten Abschnitt (18) des Verdrahtungssystems herumgelegt und in diesen Verdrahtungssystemabschnitt umhüllender Lage gehalten wird, und wobei
- das um diesen Verdrahtungssystemabschnitt (18) gelegte schrumpffähige Band zum Zwecke eines engen Herumschrumpfens um diesen Abschnitt (18) erwärmt und die in Anlage aneinandergebrachten Endabschnitte des geschrumpften Bandes unter Einwirkung von Druck und Wärme miteinander verklebt werden,
dadurch **gekennzeichnet,**
daß der Schlauch **axial** verstreckt und nach dem Auftrennen in Längsrichtung auf eine Vorratsrolle (5) aufgewickelt wird und daß von dieser Vorratsrolle die jeweils benötigten Längen abgetrennt werden.

9. Verfahren nach Anspruch 8, dadurch gekennzeichnet, daß ein auf einer Oberfläche mit einer Schmelzkleberschicht (7) versehenes schrumpffähiges Band hergestellt wird.

## Claims

1. Method of sectionally sheathing in plastic wiring systems having a multiplicity of cores (15), in which
- a tube (1) which is prepared from a shrinkable plastics material and crosslinked and has on its outer surface an axially extending bead (2) is stretched radially under the effect of heat and is subsequently cut open axially in order to form a shrinkable strip (6A),
- a length of this shrinkable strip (6A) being laid around the predetermined section (18) of the wiring system and held in position, enveloping this wiring system section (18), and
- the shrinkable strip (6A) laid around this wiring system section (18) being heated, for the purpose of shrinking snugly around this section (18), and the end sections (2a; 2b) of the shrunken strip (6A) which are brought into contact with each other being bonded to each other under the effect of pressure and heat,
characterised
in that the tube (1) is cut open in the longitudinal direction through the axial bead (2), so that the axial bead is cut open into two profiled bead regions (2a, 2b), and in that the mutually facing surfaces of these two profiled bead regions (2a, 2b) are bonded to each other upon the application of pressure and heat.

2. Method according to Claim 1, characterised in that, after cooling of the strip (6A) shrunk around the wiring system section (18), the bonded-together projecting profiled regions (2a; 2b) of this strip (6A) are cut off, so that the strip (6A) shrunk around the wiring system section (18) is given essentially the shape of a tubular sheathing (16) with a smooth surface.

3. Method according to Claim 1, characterised in that a shrinkable tube (1) is used, the axial bead (2) of which has a groove (3) running in the longitudinal direction of the bead.

4. Method according to Claim 1 or Claim 3, characterised in that a shrinkable tube (1) is used, the axial bead (2) of which is provided with undercuts (4) running in the longitudinal direction of the bead.

5. Method according to Claim 1, 3 or 4, characterised in that a shrinkable tube (1) is used, in which the axial bead (2) consists of a polymer different to the material of the remaining tube, the material of the bead having a higher crystalline melting point than the remaining tube.

6. Method according to at least one of Claims 1 to 5, characterised in that a shrinkable strip (1), provided on one surface with a hot-melt adhesive coating (7), is prepared.

7. Method according to Claim 1, 3, 5 or 6, characterised in that, after severing the bead, the severed surfaces are coated with a hot-melt adhesive (7A, 7B).

8. Method of sectionally sheathing in plastic wiring systems having a multiplicity of cores, in which
- a tube which is prepared from a shrinkable plastics material and crosslinked is stretched under the effect of heat and is subsequently cut open axially in order to form a shrinkable strip (6),
- a length of this shrinkable strip (6) being laid around a predetermined section (18) of the wiring system and held in position, enveloping this wiring system section, and
- the shrinkable strip laid around this wiring system section (18) being heated, for the purpose of shrinking snugly around this section (18), and the end sections of the shrunken strip brought into contact with each other being bonded to each other under the effect of pressure and heat,
characterised
in that the tube is stretched axially and, after cutting open in the longitudinal direction, is wound up onto a supply roller ( 5 ) and in that the lengths required in each case are cut off from this supply roller.

9. Method according to Claim 8, characterised in that a shrinkable strip, provided on one surface with a hot-melt adhesive coating (7), is prepared.

## Revendications

1. Procédé destiné a entourer d'une gaine en matière plastique, tronçon par tronçon, des systèmes de câblage présentant un grand nombre de conducteurs (15), dans lequel
- un tuyau (1), réalisé dans une matière plastique rétractable et réticulée, qui à sa surface extérieure présente un bourrelet (2) s'étendant axialement, est étiré radialement sous l'effet de la chaleur puis sectionné axialement pour former une bande (6a) rétractable,
- une longueur de cette bande (6a) rétractable étant placée autour du tronçon (18) prédéterminé du système de câblage et maintenue dans cette position enveloppant le troncon (18) du système de câblage et
- la bande (6a) rétractable, placée autour de ce tronçon (18) du système de câblage, étant chauffée pour obtenir qu'elle se serre étroitement autour de ce tronçon (18) et les parties terminales (2a ; 2b) de la bande (6a) rétractée, amenées en application l'une contre l'autre, étant collées entre elles par action de la pression et de la chaleur,
caractérisé en ce que
le tuyau (1) est ouvert dans la direction longitudinale à travers le bourrelet axial (2), de manière que celui-ci soit séparé en deux zones de bourrelet profilé (2a, 2b) et que les surfaces tournées l'une vers l'autre de ces deux zones de bourrelet profilé (2a, 2b) soient collées entre elles, lors de l'application de la pression et de la chaleur.

2. Procédé selon la revendication 1, caractérisé en ce qu'après refroidissement de la bande (6a) rétractée autour du tronçon (28) du système de câblage, les zones profilées (2a ; 2b) dépassantes, reliées entre elles, de cette bande, sont coupées, de manière que la bande (6a) rétractée autour du troncon (18) du système de câblage obtienne à peu près la forme d'un gainage (16) tubulaire de surface lisse.

3. Procédé selon la revendication 1, caractérisé en ce qu'on utilise un tuyau (1) rétractable dont le bourrelet axial (2) présente une rainure (3) s'étendant dans la direction longitudinale du bourrelet.

4. Procédé selon les revendications 1 ou 3, caractérisé en ce qu'on utilise un tuyau (1) rétractable dont le bourrelet (2) axial est pourvu de détalonnages (4) s'étendant dans la direction longitudinale du bourrelet.

5. Procédé selon les revendications 1, 3 ou 4, caractérisé en ce qu'on utilise un tuyau (1) rétractable dans lequel le bourrelet (2) axial est un polymère différent du matériau du reste du tuyau, le matériau du bourrelet présentant un point de fusion de cristallite supérieur au reste du tuyau.

6. Procédé selon l'une au moins des revendications 1 à 5, caractérisé en ce qu'il est réalisé une bande (1) rétractable pourvue sur une surface d'une couche de colle fusible (7).

7. Procédé selon les revendications 1, 3, 5 ou 6, caractérisé en ce qu'après séparation du bourrelet, les surfaces de séparation sont enduites d'une couche de colle fusible (7A, 7B).

8. Procédé destiné à entourer d'une gaine en matière plastique, tronçon par tronçon, des systèmes de câblage présentant un grand nombre de conducteurs (15), dans lequel
- un tuyau (1) réalisé dans une matière plastique rétractable et réticulée, qui à sa surface extérieure présente un bourrelet (2) s'étendant axialement, est étiré radialement sous l'effet de la chaleur puis sectionné axialement pour former une bande (6) rétractable,
- une longueur de cette bande (6) rétractable étant placée autour du troncon (18) prédéterminé du système de câblage et maintenue dans cette position enveloppant le troncon (18) du système de câblage et
- la bande rétractable, placée autour de ce troncon (18) du système de câblage, étant chauffée pour obtenir qu'elle se serre étroitement autour de ce tronçon (18) et les parties terminales de la bande (6a) rétractée, amenées en application l'une contre l'autre, étant collées entre elles par action de la pression et de la chaleur,
caractérisé en ce que
le tuyau est étiré axialement et, après ouverture dans la direction longitudinale, est enroulé sur une bobine de réserve ( 5 ) et en ce qu'on coupe les longueurs nécessaires dans chaque cas, à partir de cette bobine de réserve.

9. Procédé selon la revendication 8, caractérisé en ce qu'il est réalisé une bande rétractable pourvue sur une surface, d'une couche de colle fusible (7).
